# EUROPÄISCHE PATENTSCHRIFT

(11) **EP 0 744 212 B1**
(45) Veröffentlichungstag und Bekanntmachung des Hinweises auf die Patenterteilung: **29.09.1999**
(21) Anmeldenummer: 96105525.8
(22) Anmeldetag: 06.04.1996
(51) Int. Cl.: B01J 2/00

(54) **Trommelcoater**
Coating drum
Tambour pour enrober

(30) Priorität: 24.05.1995 DE 19518721; 12.03.1996 DE 29604568 U
(43) Veröffentlichungstag der Anmeldung: 27.11.1996
(73) Patentinhaber: L.B. BOHLE PHARMATECHNIK GmbH, D-59320 Ennigerloh (DE)
(72) Erfinder: Bohle, Lorenz Bernhard, 59320 Ennigerloh (DE)
(74) Vertreter: Habbel, Ludwig (Lutz), Dipl.-Ing.

(56) Entgegenhaltungen:
- EP-A- 0 238 028
- FR-A- 2 366 498
- GB-A- 1 308 840
- US-A- 4 241 692

## Beschreibung

Die Erfindung betrifft eine Vorrichtung nach dem Oberbegriff des Anspruches 1.

Eine derartige Vorrichtung ist als sogenannter 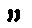 Trommelcoater" bekannt und beispielsweise der CH 625 720 entnehmbar. Sie umfaßt eine Trommel, die die Kerne aufnimmt, wobei die Trommel in Drehbewegung gehalten wird, während das Material für die Oberflächenbeschichtung auf die Kerne aufgesprüht wird.

Bei den Kernen kann es sich beispielsweise um Tablettenkerne handeln, die mit einer Oberflächenschicht geschützt werden sollen, wie es beispielsweise aus der Herstellung von Dragees bekannt ist. Neben der pharmazeutischen Industrie können Kerne auch im Bereich der Süßwarenindustrie mit einem Über zug versehen werden, beispielsweise aus Schokolade, in Form einer Zuckerglasur od. dgl. Auch im Bereich der Katalysatortechnik werden Trägermaterialien, nämlich die Kerne, mit der katalythisch reagierenden Oberflächenbeschichtung versehen. Die Kerne können dabei mit den unterschiedlichsten Verfahrensweisen hergestellt worden sein, beispielsweise gepreßt, extrudiert oder gespritzt worden sein.

Die bekannten Vorrichtungen arbeiten diskontinuierlich, d. h. chargenweise, wobei zunächst eingebrachte Tablettenkerne langsam aufgeheizt werden müssen. Während dieser Phase kann das Auftragen erster Schichten erfolgen, beispielsweise mittels in der Trommel angeordneter Sprühdüsen.

Im Anschluß an diese Startphase der Behandlung der Tablettenkerne sind stabile Temperaturverhältnisse in der Trommel hergestellt, so daß nun der Hauptauffrag der Beschichtungsmasse unter nahezu konstanten Bedingungen erfolgen kann.

In einer Schlußphase werden die beschichteten Tabletten abgekühlt, dabei weiter in Bewegung gehalten.

Schließlich können die fertig beschichteten Tabletten aus dem Trommelcoater entnommen werden. Hierzu ist üblicherweise eine Beschickungsöffnung vorgesehen, die gleichzeitig als Einlaß- und als Auslaßöffnung fungiert.

Bei der bekannten Vorrichtung ist nachteilig, daß sie aufgrund ihrer diskontinuierlichen Arbeitsweise eine relativ geringe Menge von Tablettenkernen innerhalb einer vorgegebenen Zeit behandeln kann.

Weiterhin sind gattungsfremde Anordnungen aus der EP 557 672 A1 sowie aus der DE 32 00 192 A1 bekannt. Diese gattungsfremden Vorrichtungen umfassen jeweils konisch ausgebildete, teilweise ineinanderragende Trommeln, wobei eine kontinuierliche Werkstückförderung durch diese Mehrzahl von Trommeln erfolgt. Dabei findet eine kontinuierliche Werkstückbehandlung statt, insbesondere in Form einer Werkstückwäsche. Im wesentlichen wird also eine Trommel geschaffen, die im Verhältnis zu ihrem Durchmesser eine sehr große Länge aufweist und bei der die einzelnen konusförmigen Abschnitte lediglich dazu dienen, Zwischenräume zwischen den einzelnen Trommelabschnitten zu schaffen, durch die Spülwasser mitsamt darin enthaltenen Verunreinigungen austreten kann.

Der Erfindung liegt die Aufgabe zugrunde, eine gattungsgemäße Vorrichtung dahingehend zu verbessern, daß eine nahezu kontinuierliche Arbeitsweise ermöglicht und dadurch eine höhere Leistung der Vorrichtung erzielbar ist.

Diese der Erfindung zugrundeliegende Aufgabe wird durch die Ausgestaltung einer gattungsgemäßen Vorrichtung durch die kennzeichnenden Teile des Anspruches 1 gelöst.

Die Erfindung schlägt mit anderen Worten vor, ein quasi kontinuierliches Verfahren dadurch zu ermöglichen, daß mehrere Trommeln hintereinander angeordnet sind. Auf diese Weise können in den einzelnen Trommeln nahezu konstante Betriebsbedingungen beibehalten werden, wobei insbesondere die Start- und/oder Endphase der Beschichtung in jeweils einer speziell dafür vorgesehenen Trommel vorgenommen werden kann.

Weitere vorteilhafte Ausgestaltungen der Erfindung sind den Unteransprüchen entnehmbar.

Ausführungsbeispiele einer erfindungsgemäßen Vorrichtung werden anhand der Zeichnungen im folgenden näher erläutert. Dabei zeigt
- Fig. 1: schematisch eine erfindungsgemäße Vorrichtung, wobei einige Teile vertikal geschnitten sind,
- Fig. 2: in gegenüber Fig. 1 vergrößerter Ansicht eine der Trommeln der Vorrichtung von Fig. 1,
- Fig. 3: einen schematischen Querschnitt durch die Trommel einer erfindungsgemäßen Vorrichtung,
- Fig. 4: einen Querschnitt ähnlich Fig. 3, jedoch durch ein zweites Ausführungsbeispiel einer Trommel,
- Fig. 5: eine erste Ansicht einer Sprühdüse mit einer Reinigungsbürste,
- Fig. 6: in gegenüber Fig. 5 vergrößertem Maßstab eine um 90° gedrehte Ansicht des unteren Bereiches der Sprühdüse von Fig. 5 und
- Fig. 7: eine Ansicht auf die Sprühdüse ähnlich Fig. 6, jedoch in demgegenüber verkleinertem Maßstab.

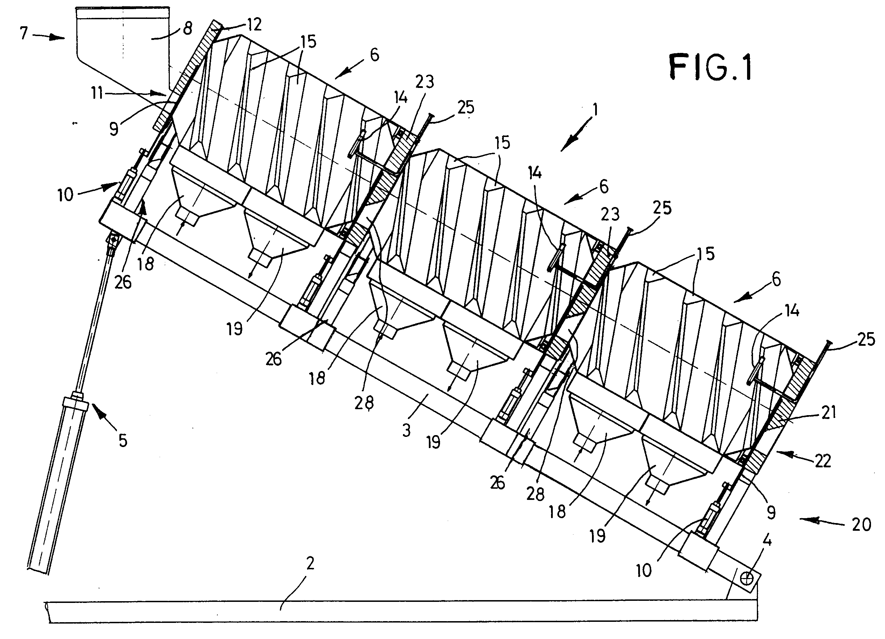

In Fig. 1 ist mit 1 allgemein eine Vorrichtung bezeichnet, die einen Grundrahmen 2 umfaßt, an dem ein Schwenkrahmen 3 um ein Gelenk 4 schwenkbar befestigt ist, wobei die Schrägstellung des Schwenkrahmens 3 gegenüber dem Grundrahmen 2 mittels eines Teleskopelementes 5 stufenlos verstellbar ist. Das Teleskopelement kann als Spindel, Hydraulikzylinder oder ähnlich ausgebildet sein und zusätzliche Klemm- oder Rastmittel aufweisen, um in verschiedenen Positionen fixiert zu werden und den Schwenkrahmen 3 in der gewählten Schrägstellung zu sichern. Die beiden Endstellungen, die der Schwenkrahmen 3 einnehmen kann, sind eine horizontale Stellung und die in Fig. 1 dargestellte Schrägstellung, in der die Beschickung der Vorrichtung 1 mit Kernen sowie die Entleerung der Kerne aus der Vorrichtung 1 erfolgen kann.

Auf dem Schwenkrahmen 3 sind drei Trommeln 6 axial hintereinander ausgerichtet, wobei die Vorrichtung 1 ein erstes Ende 7 mit einem Sammelbehälter 8 umfaßt. In diesen Sammelbehälter 8 können Tablettenkerne, beispielsweise mittels eines Förderbandes oder ähnlicher kontinuierlicher oder diskontinuierlicher Fördermittel eingegeben und dort gesammelt werden. An den Sammelbehälter 8 kann sich eine Dosiereinrichtung anschließen, beispielsweise in Form einer Zellradschleuse, einer Vibrationseinrichtung od. dgl. Auf diese Weise werden Verstopfungen im Auslaßbereich des Sammelbehälters 8 vermieden und es wird eine hohe Dosiergenauigkeit für die Befüllung der Vorrichtung ermöglicht.

Die Kerne werden von dem Sammelbehälter 8 - ggf. unter Zwischenschaltung der genannten Dosiereinrichtung - in die in Produktionsrichtung erste, d. h. in Fig. 1 obere Trommel 1 gegeben, in dem ein Schieber 9 mit Hilfe eines Stellzylinders 10 verschoben wird und eine Einlaßöffnung 11 in einer ersten Stirnwand 12 der Vorrichtung 1 freigibt.

Innerhalb dieser ersten Trommel 6 geraten die Tablettenkerne aufgrund der Schrägstellung der Trommel 6 nach unten, wandern auf diese Weise im Trommelinneren entlang und geraten in den Bereich einer Sprühdüse 14, die auf die Tablettenkerne die ersten Schichten des Beschichtungsmaterials aufsprüht. In dieser ersten Trommel 6 erfolgt die Startphase der Kernbeschichtung, wobei eine Temperaturanhebung der Kerne entweder durch eine bewußte Temperatursteuerung innerhalb der Trommel 6 erfolgt oder dadurch, daß die Kerne langsam eine im Inneren der Trommel 6 herrschende Temperatur annehmen.

Ein kontinuierlicher Umlauf der Kerne mit einer Durchmischung der Kerne erfolgt innerhalb der Trommel 6 dadurch, daß dort Mitnehmer 15 vorgesehen sind, die in Form einer einzigen durchlaufenden Wendel ausgebildet sein können. Ein derartig kontinuierlicher Umlauf der Kerne wird durch die Mitnehmer 15 auch bei einer horizontalen Ausrichtung der Trommel 6 erzielt.

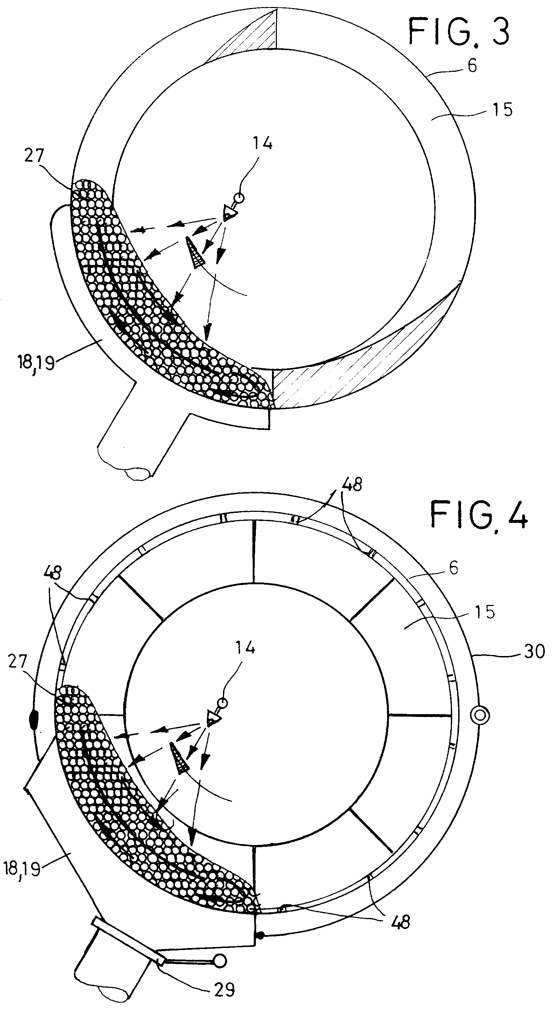

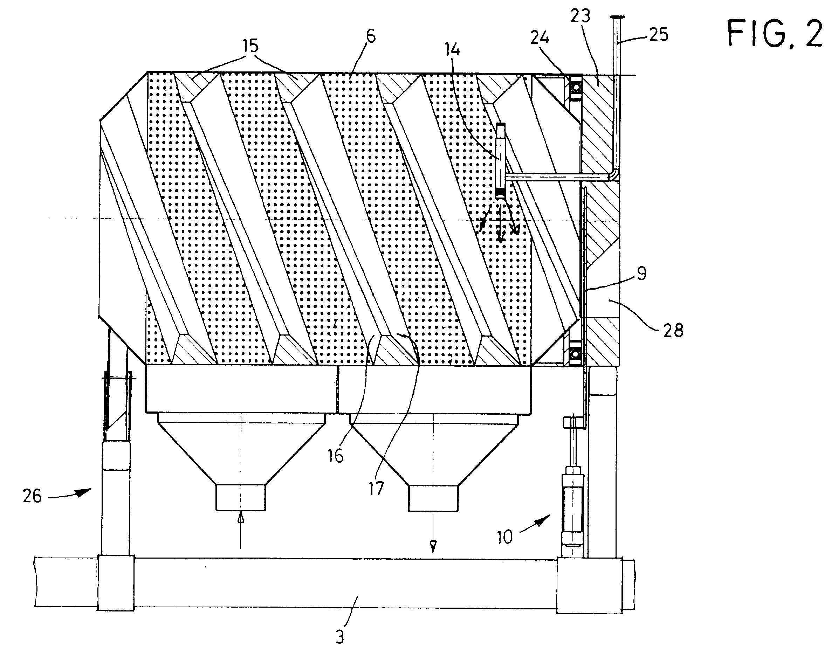

Wie insbesondere aus Fig. 2 ersichtlich ist, weisen die Mitnehmer 15 in Förderrichtung, d. h. in den Darstellungen nach links, eine steil zur Trommelinnenfläche gerichtete Förderfläche 16 auf, um einen effektiven Materialtransport zu ermöglichen. Eine Rückenfläche 17 der Mitnehmer 15 verläuft demgegenüber flacher zur Trommelinnenwand, um Hohlräume zu vermeiden, in denen sich Kerne sammeln und anbacken könnten, welche durch die aufgebrachte Beschichtung ggf. leicht klebfähig sein können. Die schräg verlaufende Rückenfläche 17 wird vielmehr durch über die Mitnehmer 15 gleitende Kerne bestrichen, so daß ein ständiger Reinigungseffekt an dieser Rückenfläche 17 erzielt wird.

Im Gegensatz zum dargestellten Ausführungsbeispiel können die Mitnehmer 15 gelocht sein, um eine Luftströmung durch die Mitnehmer 15 hindurch zu ermöglichen, durch welche eine Trocknung der beschichteten Kerne unterstützt werden kann. Alternativ zu einer derartig gelochten Ausgestaltung trapezförmiger Mitnehmer kann diese 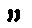 Lochung" auch dadurch geschaffen werden, daß die Mitnehmer aus schmalen Leisten bestehen, die mit Distanzstegen von der inneren Oberfläche der Trommel 6 beabstandet sind.

Eine Luftströmung innerhalb der Trommeln 6 kann durch Einlaßlufttrichter 18 und Auslaßlufttrichter 19 ermöglicht werden, wobei - wie aus Fig. 2 ersichtlich - die Trommelfläche gelocht ausgebildet sein kann, um einen Luftstrom durch das Kernbett innerhalb der Trommeln 6 zu ermöglichen. Die Anordnung von Einlaß- und Auslaßlufttrichtern 18, 19 ist dabei so gewählt und die Strömungsintensität so eingestellt, daß eine Luftströmung innerhalb der Trommeln 6 erzielt wird, die im Gegenstrom zu den aufwärts geförderten Tablettenkernen gerichtet ist. Die Absaugung der Luft aus den Trommeln 6 in dem Bereich, in dem innerhalb der Trommeln 6 die Sprühdüsen 14 angeordnet sind, bedeutet eine gleichgerichtete Strömung des Sprühstrahles und der Luft, so daß der Tröpfchennebel aus der Sprühdüse 14 optimal ausgerichtet auf die Tablettenkerne trifft und nicht durch die Luftströmung verwirbelt wird. Auf diese Weise werden Verschmutzungen innerhalb der Trommeln 6 minimiert und ein effektiver Einsatz des Beschichtungsmaterials unterstützt.

An einem zweiten Ende 20 der Vorrichtung 1, welches dem ersten Ende 7 gegenüberliegt, ist eine zweite Stirnwand 21 vorgesehen, welche eine Auslaßöffnung 22 der Vorrichtung 1 umfaßt, wobei die Auslaßöffnung 22 ebenso wie die Einlaßöffnung 11 durch einen Schieber 9 mit Hilfe eines Stellzylinders 10 geöffnet oder verschlossen wird.

Trennwände 23 sind zwischen den Trommeln 6 angeordnet und im wesentlichen gleichartig ausgebildet wie die zweite Stirnwand 21. Sie tragen jeweils ein Lager 24 zur drehbeweglichen Aufnahme der Trommeln 6 sowie den Stellzylinder 10 und den Schieber 9, um die jeweiligen Durchlaßöffnungen in den Trennwänden 23 zu verschließen. Weiterhin tragen sie Zuleitungen 25 für die Beschichtungsmasse, wobei am Ende der Zuleitungen 25 die Sprühdüsen 14 befestigt sind. Die Trennwände 23 sind auf dem Schwenkrahmen 3 längsbeweglich angeordnet, so daß durch eine derartige Verschiebung einer Trennwand 23 die benachbarte Trommel 6 zwischen zwei Trennwänden 23 entnommen werden kann. Auf diese Weise wird die Anlagenverfügbarkeit erheblich verbessert, indem verschmutzte Trommeln 6 aus der Vorrichtung entnommen und gegen Ersatztrommeln ausgetauscht werden können. Die Reinigung der verschmutzten Trommeln kann dann sehr gründlich und ggf. zeitaufwendig erfolgen, während die Vorrichtung mit der Ersatztrommel wieder betriebsbereit ist.

Weiterhin weisen die Trennwände 23 Öffnungen 28 auf, die bei entsprechender Schieberstellung eine Passage von einer zur nächsten Trommel 6 bilden, so daß die Kerne am Ende der jeweiligen Behandlungsphase von einer Trommel in die nächstfolgende Trommel 6 gelangen können, indem die entsprechenden Schieber 9 geöffnet werden, so daß nun die nächstfolgende Trommel, die zuvor auf gleiche Weise geleert wurde und deren Schieber mittlerweile geschlossen ist, mit Kernen gefüllt werden kann. Der Schieber 9 kann an seiner Oberkante anstelle eines geradlinigen Verlaufes einen kreissegmentförmig gebogenen Verlauf aufweisen, wobei der Radius dieses Kreissegmentes dem Radius der Öffnung 28 angepaßt ist. Auf diese Weise wird einerseits eine gute Führung des Schiebers 9 gewährleistet und andererseits eine vollständige Freigabe der Öffnung 28. Insbesondere kann vorgesehen sein, in Abweichung vom dargestellten Ausführungsbeispiel die Öffnung 28 axial in der Trennwand 23 vorzusehen, und zwar mit einem Durchmesser, der erheblich größer ist als bei der dargestellten Öffnung 28. So kann beispielsweise vorgesehen sein, mehr als die Hälfte de Stirnfläche einer Trommel 6 durch eine derartige Öffnung 28 als Passage zur Nachbartrommel auszugestalten. Auf diese Weise wird ein schneller Wechsel der einzelnen Behandlungsschritte ermöglicht, so daß die Kerne sehr schnell von einer in die nächstfolgende Trommel 6 übergeben werden können. Gleichermaßen wird das Beschicken der ersten Trommel und die Entleerung der letzten Trommel durch derartig groß bemessene Öffnungen beschleunigt.

Zum Antrieb der Trommeln 6 sind Antriebsmittel 26 vorgesehen, die rein beispielhaft elektromotorisch angetriebene Reibräder umfassen können, auf welchen die Trommeln 6 aufliegen. Der eigentliche Trommelquerschnitt verjüngt sich zu den beiden Stirnenden der Trommel 6 hin konisch. Gegebenenfalls kann es vorgesehen sein, wie in den Zeichnungen dargestellt, zur vereinfachten Lagerung und zum vereinfachten Antrieb eine zusätzliche zylindrische Mantelfläche zu schaffen, die nach außen den zylindrischen Abschnitt der Trommel 6 zylindrisch verlängert in dem Bereich, in dem sich die Trommelinnenseite konisch verjüngt.

Die die Öffnung 28 umgebende Randfläche der Trennwand 23 kann, insbesondere im oberen Bereich, schräg angeschnitten verlaufen und sich von dem Schieber nach außen erweitern. Auf diese Weise kann zuverlässig ausgeschlossen werden, daß beschichtete Kerne an der Trennwand 23 beim Entleeren der Trommel 6 ankleben und hängenbleiben und damit möglicherweise die Schließung des Schiebers 9 behindern können.

Die Trommeln 6 sowie die Trennwände 23 und Stirnwände 12, 21 können auf dem Schwenkrahmen 3 axial verstellbar gelagert sein, so daß auf diese Weise eine einfache Entnahme der Trommeln 6 aus der Vorrichtung 1 zu Reinigungs- oder Wartungszwecken möglich ist und zusätzliche Fenster, Klappen od. dgl. innerhalb der Trommeln 6 nicht erforderlich sind, um eine einfache Zugänglichkeit zum Trommelinneren zu ermöglichen.

Bei einer derartigen Reinigung würde beispielsweise die zweite Stirnwand 21 in der Darstellung von Fig. 1 nach rechts und unten auf dem Schwenkrahmen 3 verschoben, so daß die Trommel 6 aus der Vorrichtung 1 entnommen werden könnte. Anschließend kann die rechte der beiden dargestellten Trennwände 23 ebenfalls nach rechts und unten verschoben werden, um auf diese Weise die mittlere Trommel 6 zu entnehmen, und auf gleiche Weise können die erste Trommel, die dem Sammelbehälter 8 benachbart ist, aus der Vorrichtung 1 entnommen werden.

In Anpassung an unterschiedliche Kerndurchmesser oder sonstige Betriebsparameter kann auf diese Weise eine einfache Anpassung der Vorrichtung 1 dadurch erfolgen, daß Trommeln unterschiedlicher Länge Verwendung finden können, indem die Trenn- und Stirnwände auf dem Schwenkrahmen in Anpassung an die Trommellänge verstellbar sind. So können Trommeln unterschiedlicher Länge oder auch mit unterschiedlich und an die jeweiligen Kerne angepaßten Mitnehmern Verwendung finden.

In Fig. 3 ist schematisch ein Querschnitt durch eine Trommel 6 dargestellt, wobei sich die Trommel 6 in der Darstellung gemäß Fig. 3 im Uhrzeigersinn dreht und dabei Kerne 27 durch die Mitnehmer 15 so weit mitgefördert werden, bis das Gewicht und die Klebeigenschaften der Kerne 27, ggf. die Schrägstellung der Trommel 6, sowie die Ausgestaltung der Mitnehmer 15 dafür sorgt, daß die mitgenommenen Kerne einen oberen Totpunkt erreichen und wieder zurückrollen, so daß insgesamt ein ständig umgewälztes Kernbett erzielt wird, in dem jeder Kern mehrfach der Sprühdüse 14 ausgesetzt wird und möglichst ständig im Einflußbereich des Luftstromes befindlich ist, der durch die Lufteinlaßtrichter 18 bzw. Luftauslaßtrichter 19 geführt wird.

Durch die Ausgestaltung mehrerer Trommeln 6 können in jeder einzelnen Trommel möglichst eng begrenzte Arbeitsverhältnisse erzielt werden, so daß ein nahezu kontinuierliches Behandlungsverfahren für die Kerne erzielt wird, indem diese von Trommel zu Trommel durch das Öffnen der Schieber 9 weitergegeben werden sobald ein bestimmter Behandlungsschritt vollzogen ist. In jeder der Trommeln 6 können die Betriebsbedingungen eingestellt werden, die für diesen Behandlungsschritt optimal sind, so daß insgesamt eine höhere Leistung beim Beschichten von Kernen mit Hilfe der Vorrichtung 1 erzielbar ist.

Insbesondere können in Abwandlung des in Fig. 1 dargestellten Ausführungsbeispieles die drei oder mehrere verwendeten Trommeln 6 innerhalb einer Vorrichtung abweichend voneinander ausgestattet sein, z. B. durch ihre Baulänge, durch die Art der in der Trommel angebrachten Mitnehmer oder durch ähnliche Unterscheidungskriterien, so daß für jede Behandlungsstufe die optimalen Betriebsbedingungen wählbar und einstellbar sind.

In Fig. 4 ist ein Querschnitt durch eine Trommel 6 ähnlich wie in Fig. 3 dargestellt, jedoch bei einem zweiten Ausführungsbeispiel einer Trommel 6. Die Mitnehmer 15 sind dabei nicht als trapezförmige Mitnehmer ausgestaltet, sondern in Form von Flacheisen, die mit Hilfe von Distanzstegen 48 von der inneren Oberfläche der Trommel 6 beabstandet sind. Auf diese Weise wird eine einfache und preisgünstige Herstellung der Mitnehmer 15 ermöglicht, eine gute Belüftung der Kerne 27 sichergestellt und eine gute Umwälzung der Kerne 27 innerhalb des 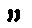 Kernbettes". Wie schon für die trapezförmigen Mitnehmer 15 erwähnt, können auch die in Fig. 4 dargestellten flacheisenartigen Mitnehmer 15 segmentartig aufgebaut sein, d. h. aus mehreren Einzelstücken. Hierdurch vereinfacht sich die Herstellung und die Kosten für die Mitnehmer 15 werden reduziert. Zudem wird eine besonders intensive Durchmischung der Kerne 27 ermöglicht.

Weiterhin ist in Fig. 4 dargestellt, daß die Einlaß- bzw. Auslaßlufttrichter 18 bzw. 19 durch eine von Hand zu betätigende Klappe 29 flüssigkeitsdicht verschlossen werden können. In Verbindung mit einem die gesamte Trommel 6 außen umgebenden Gehäuse 30, welches eine feststehende Unterschale umfaßt sowie eine demgegenüber deckelartig abklappbare bzw. abnehmbare Oberschale ergibt sich die Möglichkeit, die Unterschale des Gehäuses 30 bei verschlossener Klappe 29 komplett zu fluten. Auf diese Weise kann die Trommel 6 innerhalb der Vorrichtung 1 gereinigt werden, so daß je nach gewähltem Reinigungsverfahren die Trommel innerhalb der Vorrichtung 1 verbleiben kann oder - wie bereits oben beschrieben - gegen eine Ersatztrommel ausgetauscht werden kann, um je nach Reinigungsanforderungen innerhalb der jeweils kürzestmöglichen Zeit die Trommelreinigung zu ermöglichen.

Die Luftzuführungsleitung, die zu dem Einlaß- bzw. Auslaßtrichter 18 bzw. 19 führt, kann vorteilhaft entfernbar angeordnet sein, so daß eine handbetätigte und verschwenkbare Klappe 29 Verwendung finden kann, die gegenüber der möglichen Verwendung eines Schiebers eine bessere Abdichtung gewährleistet. Zudem kann durch einen derart entfernbaren Luftschlauch vermieden werden, daß Reinigungsflüssigkeit in das Luftleitungssystem und damit ggf. später an die zu beschichtenden Kerne gelangen kann.

Weiterhin ist Fig. 4 entnehmbar, daß je nach Einstellung der Vorrichtung 1 bzw. in Abhängigkeit von der verwendeten Art der Mitnehmer 15, der Kerndurchmesser u. dgl. ein Zentralbereich der Kerne eingestellt werden kann, der in Fig. 4 lediglich strichartig angedeutet ist, also nahezu gleich Null ist. Auf diese Weise ist sichergestellt, daß sämtliche Kerne 27 in der Trommel 6 umgewälzt und behandelt werden, so daß sich keine 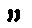 Totzone" innerhalb des Kernbettes ausbilden kann. Auf diese Weise kann eine besonders effektive Wirkungsweise der Vorrichtung 1 sichergestellt werden.

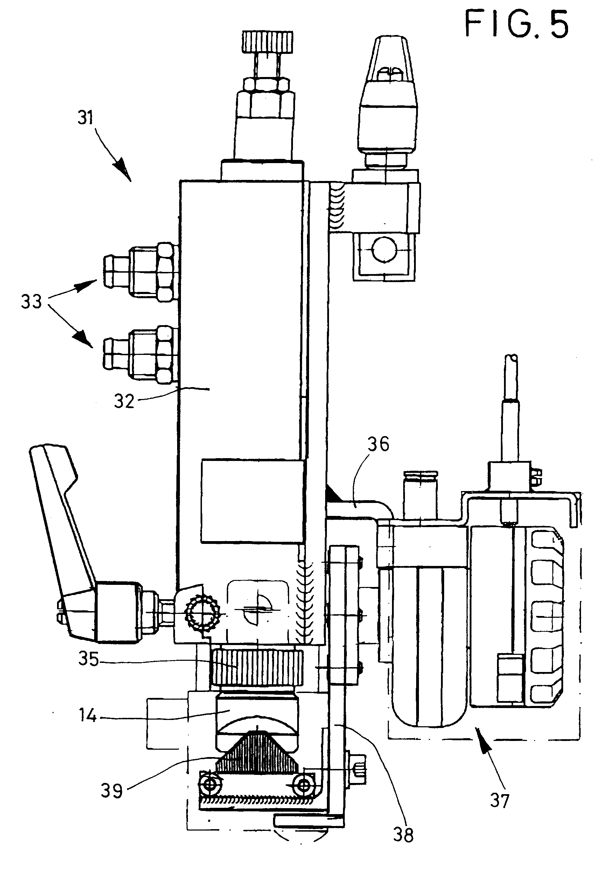

In Fig. 5 ist mit 31 allgemein eine Düsenanordnung bezeichnet, die ein Gehäuse 2 umfaßt, welches Anschlußstutzen 33 für die Zufuhr von Druckluft und aufzutragendem Fluid aufweist.

An die Unterseite des Gehäuses 32 schließt die Sprühdüse 14 an, die mittels einer Rändelmutter 35 lösbar am Gehäuse 32 befestigt ist und mittels der Rändelmutter 35 zudem zentriert werden kann, wenn es sich um eine Düse mit nicht rotationssymmetrischem Sprühbereich handelt.

An das Gehäuse 32 ist ein Träger 36 angeschweißt, an welchem eine Antriebseinheit 37, bestehend aus Motor und Steuerung, befestigt ist, die einen Bürstenträger 38 und eine daran auswechselbar befestigte Bürste 39 schwenkbeweglich antreibt.

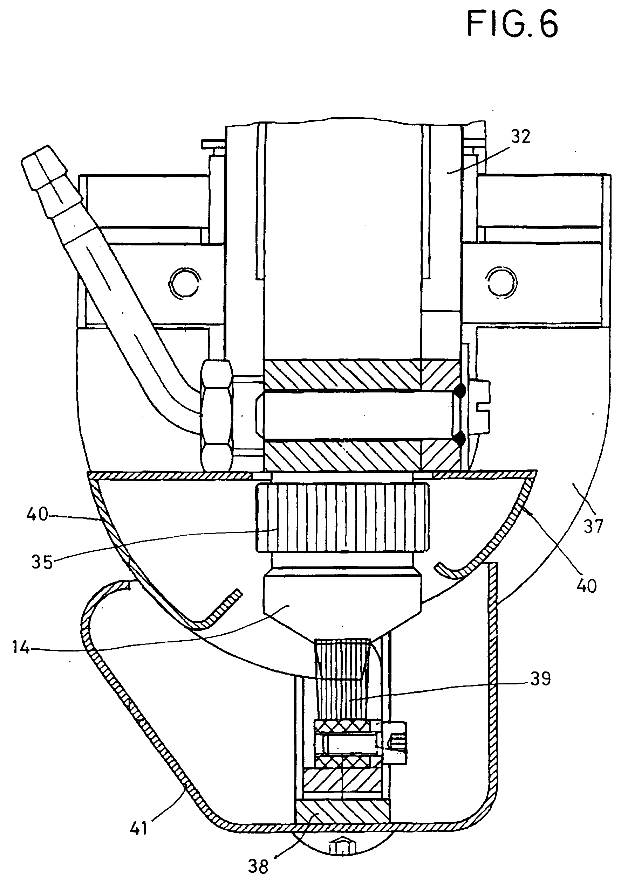

Aus Fig. 6 ist ersichtlich, daß um die Sprühdüse 14 ein haubenartig gebogenes Gehäusebauteil 40 verläuft und daß der Bürste 39 ein Bürstengehäuse 41 zugeordnet ist, welches ebenso wie die Bürste 39 am Bürstenträger 38 festgelegt ist. Das Bürstengehäuse 41 erstreckt sich bis auf einen geringen Spalt an das Gehäusebauteil 40 heran.

In den Fig. 5 und 6 befindet sich die Bürste 39 in ihrer Reinigungsstellung, in der sie an der Sprühdüse 14 anliegt. Wie insbesondere aus Fig. 6 deutlich wird, wird durch das Gehäusebauteil 40 und das Bürstengehäuse 41 eine nahezu abgeschlossene Kammer geschaffen, in der die durch die Bürste 39 von der Sprühdüse 14 entfernten Partikel gesammelt werden, so daß diese Partikel nicht auf das zu beschichtende Gut gelangen können.

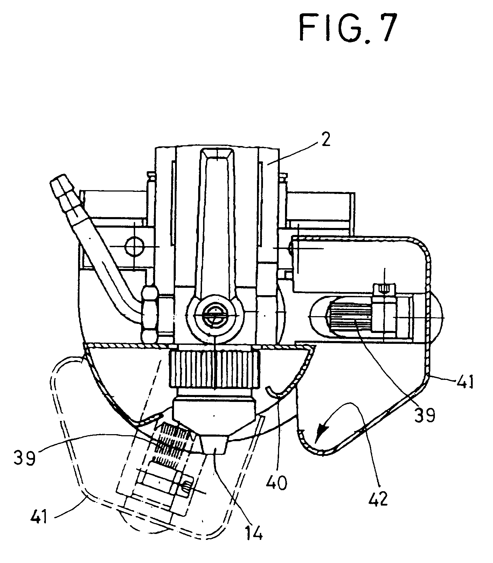

Fig. 7 zeigt in einer Darstellung ähnlich Fig. 6, jedoch in demgegenüber verkleinertem Maßstab, den Schwenkbereich der Bürste 39. Dabei ist die Bürste rechts in ihrer Freigabestellung dargestellt, in der ein ungehinderter Sprühbetrieb der Sprühdüse 14 möglich ist. Das Bürstengehäuse 41 bildet in dieser Freigabestellung der Bürste 39 eine Sammelrinne 42 für die Partikel aus, die innerhalb des Bürstengehäuses 41 gesammelt wurden. Auf diese Weise wird auch, während sich die Bürste 39 in ihrer Freigabestellung befindet, verhindert, daß diese Partikel auf das zu beschichtende Gut gelangen können.

Weiterhin wird aus Fig. 7 deutlich, daß eine preisgünstig und einfach montierbare, starr am Bürstenträger 38 befestigte Bürste 39 Verwendung finden kann. Die Reinigungswirkung an der Sprühdüse 14 wird nicht etwa durch rotierende Borsten erzielt, sondern dadurch, daß die Bürste 39 aus ihrer rechts dargestellten Freigabestellung bis zur Anlage an der Sprühdüse 14 und bis darüber hinaus in ihre links gestrichelt dargestellte Endstellung verschwenkt werden kann, wobei im dargestellten Ausführungsbeispiel ein Schwenkbereich von etwa 110° vorgesehen ist.

## Patentansprüche

1. Vorrichtung zum Aufbringen einer Oberflächenschicht auf Kerne, mit einer drehbar gelagerten Trommel zur Aufnahme der Kerne, mit wenigstens einer Sprühdüse zum Auftrag des Oberflächenmaterials auf die Kerne, sowie mit einer Heizeinrichtung für den Innenraum der Trommel, sowie mit einer Einlaß- und einer Auslaßöffnung, dadurch gekennzeichnet, daß die Vorrichtung (1) wenigstens zwei Trommeln (6) umfaßt, wobei jeweils zwischen zwei Trommeln (6) eine verschließbare Passage für die Kerne (27) angeordnet ist, wobei die Vorrichtung (1) ein erstes Ende (7) mit einer ersten Trommel (6) aufweist, welche die Einlaßöffnung (11) für die Kerne (27) aufweist und wobei die Vorrichtung (1) ein von dieser ersten Trommel (6) entferntes zweites Ende (20) mit einer zweiten Trommel (6) aufweist, welche die Auslaßöffnung (22) für die Kerne (27) aufweist.

2. Vorrichtung nach Anspruch 1, dadurch gekennzeichnet, daß die Trommeln (6) gemeinsam an einem Schwenkrahmen (3) befestigt sind, der in unterschiedlichen Schrägstellungen gegenüber der Horizontalen feststellbar ist, wobei jeweils das erste Ende (7) der Vorrichtung (1) höher angeordnet ist als ihr zweites Ende (20).

3. Vorrichtung nach Anspruch 1 oder 2, dadurch gekennzeichnet, daß zumindest einer Trommel (6) Einström- und Ausströmöffnungen (18, 19) für einen Luftstrom zugeordnet sind.

4. Vorrichtung nach Anspruch 3, dadurch gekennzeichnet, daß bei Anordnung einer Sprühdüse (14) in der Trommel (6) die Ein- und Ausströmöffnungen (18, 19) zur gleichgerichteten Führung des Luftstromes mit dem Sprühnebel angeordnet sind.

5. Vorrichtung nach einem der vorhergehenden Ansprüche, dadurch gekennzeichnet, daß die Trommeln (6) auf einem Rahmen axial hintereinander angeordnet und jeweils axial beweglich gelagert sind.

6. Vorrichtung nach Anspruch 5, gekennzeichnet durch zwischen den Trommeln (6) angeordnete, ebenfalls beweglich gelagerte Trennwände (23), die die Stirnwände der Trommelräume ausbilden und verschließbare Öffnungen (28) aufweisen.

7. Vorrichtung nach Anspruch 6, dadurch gekennzeichnet, daß die Antriebsmittel (26) für die Trommeldrehbewegung sowie die Sprühdüsen (14) an den Trennwänden (23) bzw. Stirnwänden (21) befestigt bzw. gelagert sind.

8. Vorrichtung nach einem der vorhergehenden Ansprüche, dadurch gekennzeichnet, daß vor der Einlaßöffnung (11) ein Sammelbehälter (8) für die Kerne (27) vorgesehen ist.

9. Vorrichtung nach einem der vorhergehenden Ansprüche, dadurch gekennzeichnet, daß im Trommelinneren Mitnehmer (15) für die Kerne (27) angeordnet sind.

10. Vorrichtung nach Anspruch 9, dadurch gekennzeichnet, daß die Mitnehmer (15) als ein- oder mehrgängige Wendel ausgebildet sind.

11. Vorrichtung nach Anspruch 9, dadurch gekennzeichnet, daß die Mitnehmer (15) eine in Mitnahmerichtung vordere Förderfläche (16) aufweisen, die steiler zur Trommelinnenfläche angeordnet ist als eine in Mitnahmerichtung hintere Rückenfläche (17) der Mitnehmer (15).

12. Vorrichtung nach Anspruch 9, dadurch gekennzeichnet, daß die Mitnehmer (15) Öffnungen zum Luftdurchtritt aufweisen.

13. Vorrichtung nach einem der vorhergehenden Ansprüche, dadurch gekennzeichnet, daß der Sprühdüse (14) eine beweglich gelagerte Bürste (39) zugeordnet ist, die aus einer Freigabestellung, in der sie außerhalb des Sprühbereiches der Sprühdüse (14) angeordnet ist, in eine Reinigungsstellung beweglich ist, in der sie der Sprühdüse (14) anliegt.

## Claims

1. Apparatus for applying a surface layer to cores, having a rotatably mounted drum to accommodate the cores, having at least one spray nozzle to apply the surface material to the cores, and having a heating device for the interior of the drum, and having an inlet opening and an outlet opening, characterized in that the apparatus (1) comprises at least two drums (6), a closeable passage for the cores (27) being arranged between two drums (6) in each case, the apparatus (1) having a first end (7) with a first drum (6), which has the inlet opening (11) for the cores (27), and the apparatus (1) having a second end (20), remote from this first drum (6), with a second drum (6), which has the outlet opening (22) for the cores (27).

2. Apparatus according to Claim 1, characterized in that the drums (6) are jointly fastened to a pivoting frame (3), which can be fixed in different inclined positions with respect to the horizontal, the first end (7) of the apparatus (1) being arranged higher than its second end (20) in each case.

3. Apparatus according to Claim 1 or 2, characterized in that at least one drum (6) is assigned inflow and outflow openings (18, 19) for an airstream.

4. Apparatus according to Claim 3, characterized in that if a spray nozzle (14) is arranged in the drum (6), the inflow and outflow openings (18, 19) are arranged so as to guide the airstream in the same direction as the spray mist.

5. Apparatus according to one of the preceding claims, characterized in that the drums (6) are arranged axially one behind another on a frame and are in each case mounted such that they can move axially.

6. Apparatus according to Claim 5, characterized by dividing walls (23) which are arranged between the drums (6), are likewise mounted such that they can move, form the end walls of the drum chambers and have closeable openings (28).

7. Apparatus according to Claim 6, characterized in that the drive means (26) for the drum rotational movement, and the spray nozzles (14), are respectively fastened to and mounted on the dividing walls (23) and end walls (21).

8. Apparatus according to one of the preceding claims, characterized in that a collecting container (8) for the cores (27) is provided upstream of the inlet opening (11).

9. Apparatus according to one of the preceding claims, characterized in that carriers (15) for the cores (27) are arranged in the drum interior.

10. Apparatus according to Claim 9, characterized in that the carriers (15) are designed as single or multiple helices.

11. Apparatus according to Claim 9, characterized in that the carriers (15) have a conveying face (16) which is at the front in the carrying direction and is arranged more steeply in relation to the inner surface of the drum than a rear face (17) of the carrier (15), this face being at the back in the carrying direction.

12. Apparatus according to Claim 9, characterized in that the carriers (15) have openings for the passage of air.

13. Apparatus according to one of the preceding claims, characterized in that the spray nozzle (14) is assigned a brush (39) which is mounted such that it can move from a clearance position, in which it is arranged outside the spraying area of the spray nozzle (14), into a cleaning position, in which it rests on the spray nozzle (14).

## Revendications

1. Dispositif d'application d'une couche superficielle sur des noyaux, comportant un tambour monté rotatif pour recevoir les noyaux, au moins un gicleur de pulvérisation pour l'application de la matière superficielle sur les noyaux et un dispositif de chauffage pour l'intérieur du tambour ainsi qu'un orifice d'entrée et un orifice de sortie, caractérisé en ce que le dispositif (1) comprend au moins deux tambours (6), un passage obturable pour les noyaux (27) étant disposé respectivement entre chaque tambours (6), le dispositif comprenant une première extrémité (7) avec un premier tambour (6) qui présente l'orifice d'entrée (11) pour les noyaux (27) et le dispositif (1) comprenant une seconde extrémité (20) éloignée de ce premier tambour (6), avec un second tambour (6) qui présente l'orifice de sortie (22) pour les noyaux (27).

2. Dispositif selon la revendication 1, caractérisé en ce que les tambours (6) sont fixés ensemble sur un châssis articulé (3) qui peut être fixé dans différentes positions inclinées par rapport à l'horizontale, la première extrémité (7) du dispositif (1) étant disposée à chaque fois plus haut que sa seconde extrémité (20).

3. Dispositif selon la revendication 1 ou 2, caractérisé en ce que des orifices d'admission et d'évacuation (18, 19) pour un courant d'air sont formés sur au moins un tambour (6).

4. Dispositif selon la revendication 3, caractérisé en ce que, dans le cas de la disposition d'un gicleur de pulvérisation (14) dans le tambour (6), les orifices d'admission et d'évacuation (18, 19) sont disposés de manière à effectuer un guidage orienté de manière identique du courant d'air avec le brouillard de pulvérisation.

5. Dispositif selon l'une quelconque des revendications précédentes, caractérisé en ce que les tambours (6) sont disposés sur un châssis axialement l'un derrière l'autre et sont montés de façon à se déplacer respectivement axialement.

6. Dispositif selon la revendication 5, caractérisé en ce qu'entre les tambours (6) sont disposées des cloisons (23) également montées mobiles, qui forment les parois frontales des chambres de tambour et présentent des orifices (28) obturables.

7. Dispositif selon la revendication 6, caractérisé en ce que les moyens d'entraînement (26) pour le mouvement de rotation des tambours ainsi que les gicleurs de pulvérisation (14) sont respectivement montés fixes sur les cloisons (23) ou les parois frontales (21).

8. Dispositif selon l'une quelconque des revendications précédentes, caractérisé en ce qu'avant l'orifice d'admission (11), il est prévu un bac collecteur (8) pour les noyaux (27).

9. Dispositif selon l'une quelconque des revendications précédentes, caractérisé en ce que des taquets d'entraînement (15) pour les noyaux (27) sont disposés à l'intérieur du tambour.

10. Dispositif selon la revendication 9, caractérisé en ce que les taquets d'entraînement (15) sont réalisés sous forme de spirale à un ou plusieurs tours.

11. Dispositif selon la revendication 9, caractérisé en ce que les taquets d'entraînement (15) présentent une surface frontale (16) disposée en avant dans le sens d'entraînement et qui présente une pente plus forte par rapport à la surface intérieure du tambour qu'une surface dorsale (17) située en arrière dans le sens d'entraînement des taquets d'entraînement (15).

12. Dispositif selon la revendication 9, caractérisé en ce que les taquets d'entraînement (15) présentent des orifices pour le passage de l'air.

13. Dispositif selon l'une quelconque des revendications précédentes, caractérisé en ce qu'au gicleur de pulvérisation (14) est affectée une brosse montée mobile (39) qui se déplace à partir d'une position de dégagement dans laquelle elle se trouve à l'extérieur de la zone de pulvérisation du gicleur pulvérisateur (14), dans une position de nettoyage dans laquelle elle est adjacente au gicleur pulvérisateur (14).
